Europäisches Patentamt

European Patent Office

Office européen des brevets

(11) Publication number: **0 362 172**
**A2**

## (12) EUROPEAN PATENT APPLICATION

(21) Application number: **89850307.3**

(22) Date of filing: **19.09.89**

(51) Int. Cl.5: **G01C 19/72**

(30) Priority: **27.09.88 SE 8803404**

(43) Date of publication of application:
**04.04.90 Bulletin 90/14**

(84) Designated Contracting States:
**AT BE CH DE ES FR GB GR IT LI LU NL SE**

(71) Applicant: **AB BOFORS**

**S-691 80 Bofors(SE)**

(72) Inventor: **Johnsson, Stig**
**Grenadjärvägen 16D**
**S-691 53 Karlskoga(SE)**

(74) Representative: **Olsson, Gunnar**
**Nobel Corporate Services Patents and**
**Trademarks**
**S-691 84 Karlskoga(SE)**

(54) **Fibre optical gyro.**

(57) In an ammunition unit use is made of a fibre-optic gyro with one or more fibre-optic loops (2, 3, 4). Each gyro quantity in the form of roll, pitch or yaw angle can be measured by detecting the phase displacements of the light in each loop. The loop or at least one of the loops extends essentially connected on or in the ammunition unit shell (1). A centre axis (2a, 3a, 4a) extending at right angles to the plane of the loop is inclined relative to the longitudinal axis (1a) of the ammunition unit.

EP 0 362 172 A2

## Fibre-optic gyro intended for ammunition unit

### TECHNICAL FIELD

The present invention relates to a fibre-optic gyro intended for an ammunition unit, such as a missile, projectile etc., and having one or more fibre-optic loops, and in which each gyro quantity in the form of roll, pitch or yaw angle velocity can be measured by detecting the phase displacements of the light in each loop.

### PRIOR ART

The invention can be used, inter alia, for missiles and final-phase-guided projectiles in which the guidance system and sensor system of the projectile require information on how the ammunition unit is oriented in the air.

For example, in the case of final-phase-guided projectiles, the vertical plane must be set with relatively great accuracy. The inclination of the projectile in the said plane as a function of the time after firing can be calculated with great accuracy by the fire-control system, and the computed information can be transmitted to the projectile guidance system before or on firing. The curve of the unguided (ballistic) trajectory of the projectile is generally used for setting the vertical plane. After the vertical direction relative to the body of the projectile has thus been set, a gyro system, preferably a triaxial gyro system, must retain this information over a greater or lesser length of time. The longer the gyro system can retain the information with sufficient accuracy, the greater the possibilities of striking with high precision and of being able to use gliding, for example, in order to achieve longer ranges.

A considerable difficulty in connection with the use of gyros is that, after a storage period of many years, they must still be able to deal with a firing acceleration of 20,000 g or more and yet function with the desired precision.

One type of gyro which could be used in the above context is the so-called solid-state gyro. However, these gyros too are not adapted to deal with extremely high firing accelerations.

The present invention therefore takes as its starting point another type of gyro, the so-called fibre-optic gyro, which is based on the principle of measuring the phase displacement of the light when it passes clockwise or counter-clockwise through a long fibre-optic light guide. These gyros can be dimensioned in such a way that they acquire a precision which is more than adequate for use in a missile or a final-phase-guided projectile.

Since these gyros do not contain any movable parts, it is possible to design them with a mechanical construction which results in their being able to deal with the high firing accelerations.

### DESCRIPTION OF THE INVENTION

### TECHNICAL PROBLEM

The disadvantage with previously known fibre-optic gyros is that they require a large amount of space inside the ammunition unit, since the surface area which each fibre loop encloses is in direct proportion to the performance of the gyro. The output signal of the gyro increases linearly with the number of rotations multiplied by the enclosed surface. The gyros of earlier types which have hitherto been proposed have a diameter of about 80 mm for each loop. For technical reasons, it would appear to be extremely difficult to appreciably reduce these dimensions while maintaining an efficient functioning of the gyro.

The gyro senses the rotation about an axis, hereinafter referred to as the centre axis, which is at right angles to the plane of the fibre loop. Building the gyro into the ammunition unit with, for example, the three axes, which a complete orientation demands, thus results in a considerable volume having to be taken up inside the unit.

### SOLUTION

The aim of the present invention is to provide a gyro which solves, inter alia, the problem described above. The feature which may chiefly be regarded as being characteristic of the new gyro is that each loop thereof extends essentially connected on or in the shell of the ammunition unit and in such a way that a centre axis extending at right angles to the plane of the loop is inclined relative to the longitudinal axis of the ammunition unit.

In further developments of the inventive concept, the degree of inclination of each centre axis in relation to the longitudinal axis of the unit is taken into account. In cases where only one loop is to be included in the gyro, the degree of inclination can be selected within the angle range of 25-75° and can preferably be about 45°.

In cases where two or three fibre-optic loops are included, the centre axes of the loops are arranged with angles relative to the said longitudinal axis which are essentially of the same size and are selected within the range of 30-60°. In a preferred embodiment all the centre axes are inclined relative to the longitudinal axis by about 45°.

In cases where there are three loops, the gyro axes form systems of coordinates which differ from the coordinates system which is natural for an ammunition unit. Conversion from the coordinates system which the loops represent to that which is natural for a projectile can be effected using electronic equipment which can be designed with technology known per se and in a manner known per se. The said axes of the said gyros may advantageously be made up of an orthogonal system of coordinates, whose axes form such a coordinates system. However, orthogonality is not necessary.

ADVANTAGES

The invention makes it possible to accommodate a large loop in a missile or projectile. The area which the loop encloses is great. In cases where there is a triaxial gyro system, the unique orientation of each loop means that the loops do not encroach upon the inside of the ammunition unit in an inappropriate manner. The loops can be given a position in which they do not cut through the inside of the unit and do not take up space effectively intended for charge. For example, in the case of ammunition units with an actuation part of the type with directed explosive strength, it is possible to prevent the fibre loops from extending through the radiation-forming centre of the actuation part and it is thus possible to maintain an effective action from the actuation part.

DESCRIPTION OF FIGURES

A proposed embodiment of an arrangement which shows the characteristic features significant to the invention will be described hereinbelow with simultaneous reference to the attached drawing, in which

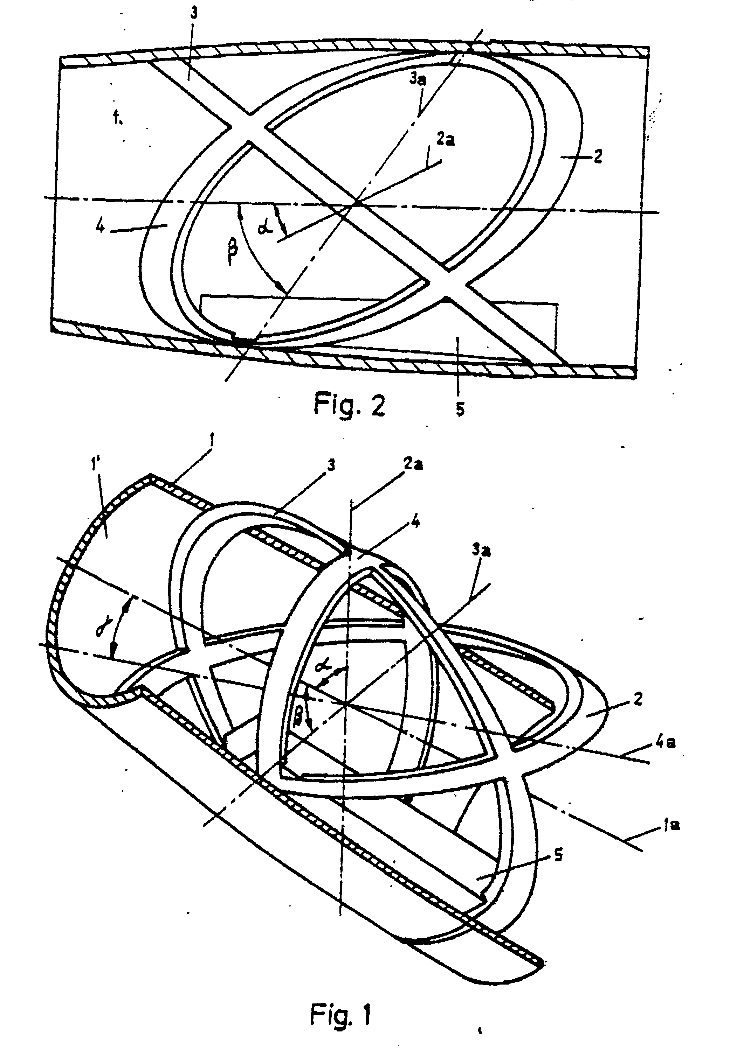

Figure 1 is a perspective and cutaway view of parts of an ammunition unit shell in which there are arranged fibre loops belonging to a gyro system with a combined optronic and electronic unit, and

Figure 2 shows, in longitudinal section, the ammunition unit with loops and unit according to Figure 1.

PREFERRED EMBODIMENT

The ammunition unit shell is indicated by 1 and a triaxial gyro system is represented by three fibre loops 2, 3 and 4. The longitudinal axis of the ammunition unit is shown by 1a. The loops are preferably ellipsoid in order to follow the outer form of the projectile. The gyro system senses the rotation of the ammunition unit about axes, centre axes, which are at right angles to the plane of the loops. The centre axis of loop 2 is indicated by 2a, and the centre axes of loops 3 and 4 are indicated by 3a and 4a respectively.

According to the invention, the centre axes 2a, 3a, 4a are inclined relative to the longitudinal axis 1a. The angles of inclination of the centre axes 2a, 3a and 4a relative to the longitudinal axis 1a are indicated by $\alpha$, $\beta$ and $\lambda$ respectively. In the system shown, the angles are preferably of the same size and are chosen at about 54.7°, which results in the loops being connected to the inner side 1' of the shell along their entire lengths. Alternatively, the angles can be chosen between 30 and 60°, in which respect parts of one (two-loop system) or two (three-loop system) are further from the inner side 1' of the shell. In the case of one loop, the inclination can be varied to a greater extent and is chosen, for example, within the range of 25-75°.

A combined electronic and optronic unit is indicated by 5. The unit 5 is designed and connected to the gyro loops in a known manner. The speed of rotation of the ammunition unit about the axes 2a, 3a and 4a is measured in the unit 5. The unit 5 can execute coordinate transformations which, however, can alternatively be executed in the electronics unit of a guidance system (not shown) for the ammunition unit.

By means of the arrangement indicated above, the loops are able to run entirely under the outer casing of the projectile. In this way they encroach to a minimum extent on the space of the ammunition unit, since equipment in the ammunition unit, such as guidance electronics, sensor equipment, actuating parts etc., can advantageously be positioned inside the loops. Furthermore, the loops enclose an extremely large area and this, according to the above, is of great advantage for the gyro function as such.

The invention is not limited to the embodiment described above as an example, but can be subjected to modifications within the scope of the following patent claims and the inventive concept.

**Claims**

1. Fibre-optic gyro which is intended for an ammunition unit (1), such as a missile, projectile etc., and which has one or more fibre-optic loops (2, 3, 4), and in which each gyro quantity in the form of roll, pitch or yaw angle can be measured by detecting the phase displacements of the light in each loop, characterized in that ths loop or at least one of the loops extends essentially connected on or in the ammunition unit shell (1) and in such a way that a centre axis (2a, 3a, 4a) extending at right angles to the plane of the loop is inclined relative to the longitudinal axis (1a) of the ammunition unit.

2. Gyro according to patent claim 1, characterized in that, in cases where there is one fibre-optic loop, the inclination of the centre axis thereof relative to the said longitudinal axis is chosen within the angle range of 25-75°.

3. Gyro according to patent claim 1, characterized in that, in cases where there are two or three fibre-optic loops, the inclinations of the centre axes thereof relative to the said longitudinal axis are of the same size.

4. Gyro according to patent claim 3, characterized in that the inclinations of the centre axes relative to the longitudinal axis are about 54.7°.

5. Gyro according to any one of the preceding patent claims, characterized in that it comprises or cooperates with a conversion unit (5) which executes coordinate transformation of the coordinate of each loop to a representative value in the desired or natural system of coordinates.

Fig. 2

Fig. 1